# NEUE EUROPÄISCHE PATENTSCHRIFT

(11) **EP 2 898 521 B2**
(45) Veröffentlichungstag und Bekanntmachung des Hinweises auf die Entscheidung über den Einspruch: **13.10.2021**
(45) Hinweis auf die Patenterteilung: 28.06.2017
(21) Anmeldenummer: 12798202.3
(22) Anmeldetag: 19.11.2012
(51) Int. Cl.: H02H 7/085, H01H 9/54

(54) **SCHALTGERÄT ZUM STEUERN DER ENERGIEZUFUHR EINES NACHGESCHALTETEN ELEKTROMOTORS**
SWITCHING APPARATUS FOR CONTROLLING THE ENERGY SUPPLY TO A DOWNSTREAM CONNECTED ELECTRICAL MOTOR
DISPOSITIF DE COMMUTATION POUR COMMANDER L'ALIMENTATION D'ÉNERGIE À UN MOTEUR ÉLECTRIQUE MONTÉ EN AVAL

(43) Veröffentlichungstag der Anmeldung: 29.07.2015
(73) Patentinhaber: Siemens Aktiengesellschaft, 80333 München (DE)
(72) Erfinder: KUHLA, Hubert, 91217 Hersbruck (DE); FRITSCH, Andreas, 92245 Kümmersbruck (DE); GRUBER, Stefan, 92245 Kümmersbruck (DE)
(86) Internationale Anmeldenummer: PCT/EP2012/072989
(87) Internationale Veröffentlichungsnummer: WO 2014/075743

(56) Entgegenhaltungen:
- WO-A1-2005/099080
- US-A1- 2002 093 774
- US-A1- 2007 063 661

## Beschreibung

Die Erfindung betrifft ein Schaltgerät zum Steuern der Energiezufuhr eines nachgeschalteten Elektromotors sowie ein Verfahren des Schaltgeräts. Das erfindungsgemäße Schaltgerät ist insbesondere ein Motorstarter und wird insbesondere innerhalb der industriellen Automatisierungstechnik eingesetzt. Mittels des Schaltgeräts kann ein dem Schaltgerät nachgeschalteter Elektromotor gesteuert werden. Hierfür wird eine Energieversorgung des dem Schaltgerät nachgeschalteten Elektromotors über das Schaltgerät geführt, so dass der Elektromotor mit einem Versorgungsnetz verbunden ist. Das Versorgungsnetz ist insbesondere ein Niederspannungsnetz einer industriellen Anlage (z.B. drei Phasen, 400 Volt, 50 Hertz). Motorstarter mit Schutzfunktionen werden z.B. in WO2005099080 und US2002093774 beschrieben.

Zum Steuern der Energieversorgung des nachgeschalteten Elektromotors umfasst das Schaltgerät eine Steuereinheit und eine erste Strombahn. Über die erste Strombahn wird eine erste Phase des Versorgungsnetzes zum nachgeschalteten Elektromotor geführt. Die erste Strombahn umfasst einen ersten elektromechanischen Schalter und eine in Reihe zum ersten Schalter geschaltete Parallelschaltung eines zweiten elektromechanischen Schalters mit einem Halbleiterschalter. Die Steuereinheit kann ein Schaltsignal für den ersten Schalter, den zweiten Schalter und den Halbleiterschalter ausgeben und hierüber den erwünschten Schaltzustand der Schalter steuern. Der erste und zweite Schalter ist insbesondere ein Schließer, welcher bei Vorliegen eines Schaltsignals der Steuereinheit im geschlossenen Schaltzustand gehalten wird. Wird das Schaltsignal vom ersten oder zweiten Schalter abgeschaltet, so nimmt der Schalter automatisch aufgrund einer Rückstellkraft (z.B. eine Federkraft, welche auf einen Kontakt des jeweiligen Schalters wirkt) den geöffneten Zustand ein. Derartige Schalter sind insbesondere Relais. Der Halbleiterschalter nimmt bei Vorliegen des Schaltsignals der Steuereinheit vorzugsweise den elektrisch leitenden Zustand ein.

Das Schaltgerät umfasst einen Versorgungsanschluss, über welchen die Steuereinheit die Energie für die Schaltsignale beziehen kann. Üblicherweise wird eine dezentrale Versorgungsquelle mittels einer Leitung mit dem Versorgungsanschluss des Schaltgeräts verbunden, so dass im aktiven Betrieb des Schaltgeräts eine Versorgungsspannung über den Versorgungsanschluss anliegt. Über den Versorgungsanschluss bezieht das Schaltgerät die für die Schaltsignale erforderliche Energie. Vorzugsweise wird die gesamte geräteinterne Energieversorgung des Schaltgeräts über den Versorgungsanschluss des Schaltgeräts bezogen.

Das Schaltgerät wird vorzugsweise eingesetzt, um Drehstrommotoren und auch Einphasenwechselstrommotoren ein- und auszuschalten. Die dem Schaltgerät nachgeschalteten Motoren werden vorzugsweise durch das Schaltgerät ferner gegen Überlast (Kurzschlussschutz und/oder thermische Überlast) geschützt.

Sofern das Schaltgerät in sicherheitskritischen Applikationen eingesetzt wird, muss ein sicheres Abschalten des dem Schaltgerät nachgeschalteten Elektromotors durch das Schaltgerät sichergestellt werden.

Bei Schaltgeräten mit Notabschaltung des dem Schaltgerät nachgeschalteten Motors ist ein mögliches Abschaltprinzip, die Versorgungsspannung des Schaltgeräts mittels eines in den Versorgungsstrang zwischen der Versorgungsquelle und dem Versorgungsanschluss zwischengeschalteten Schaltgeräts (z.B. ein Not-Aus-Schaltgerät) abzuschalten. Funktionsbedingt fallen durch das Abschalten der Versorgungsspannung die elektromechanischen Schalter des Schaltgerätes selbsttätig in den AusZustand (d.h. die Schalter sind geöffnet). Auf diese Weise wird bei einem Wegschalten der Versorgungsspannung die über das Schaltgerät zum Motor geführte Energiezufuhr abgeschaltet, so dass der Motor sicher ausgeschaltet wird. Durch das Wegschalten der Versorgungsquelle und dem automatischen Öffnen der Schalter bildet sich an den Schaltern ein Abschaltlichtbogen, welcher einen starken Verschleiß an den Schaltern verursacht, so dass die Anzahl derartiger Schaltspiele bei den Schaltgeräten üblicherweise begrenzt ist.

US2007063661 schlägt vor, die Steuerschaltung eines Antriebs im Notfall kurzzeitig über einen Kondensator zu versorgen, damit der Antrieb sicher abgeschaltet werden kann.

Der Erfindung liegt die Aufgabe zugrunde ein verbessertes Schaltgerät bereitzustellen. Vorzugsweise wird durch das Schaltgerät eine erhöhte Anzahl an Schaltspielen, insbesondere bezüglich eines Schaltvorgangs aufgrund eines Abschaltens der Versorgungsspannung am Versorgungsanschluss, ermöglicht. Das Schaltgerät soll insbesondere ein sicheres Abschalten eines dem Schaltgerät nachgeschalteten Elektromotors sicherstellen.

Diese Aufgabe wird gelöst durch eine Vorrichtung gemäß Anspruch 1, d.h. durch ein Schaltgerät mit einer Steuereinheit, einem Versorgungsanschluss, einem Netzteil, welches ein geräteinternes Netzteil des Schaltgerätes ist und die am Versorgungsanschluss anliegende Spannung in eine andere Spannung umwandelt, und einer ersten Strombahn, die mit einem Versorgungsnetz verbunden ist, die einen ersten elektromechanischen Schalter und eine in Reihe zum ersten Schalter geschaltete Parallelschaltung eines zweiten elektromechanischen Schalters mit einem Halbleiterschalter umfasst, wobei die Steuereinheit ein Schaltsignal für den ersten Schalter, den zweiten Schalter und den Halbleiterschalter ausgeben kann, wobei der Versorgungsanschluss mit dem Netzteil verbunden ist und die Steuereinheit über das Netzteil die Energie für die Schaltsignale bezieht, wobei das Schaltgerät einen Energiespeicher und eine mit der Steuereinheit verbundene Messvorrichtung umfasst, wobei der Energiespeicher zwischen dem Versorgungsanschluss und dem Netzteil zwischengeschaltet ist, so dass mittels des Energiespeichers eine über den Versorgungsanschluss erfolgende Energieversorgung des Schaltgerätes durch eine Versorgungsquelle geräteintern gepuffert wird, wobei die Steuereinheit mittels der Messvorrichtung die über den Versorgungsanschluss erfolgende Energieversorgung des Schaltgerätes im Bereich zwischen dem Versorgungsanschluss und dem Netzteil überwachen kann, wobei die Steuereinheit derart ausgebildet ist, dass sie, wenn die mittels der Messvorrichtung überwachte Energieversorgung in einen kritischen Bereich fällt, mittels der Energie des Energiespeichers
- in einem ersten Schritt den Halbleiterschalter elektrisch leitend schaltet und anschließend den zweiten Schalter öffnet,
- nach dem ersten Schritt in einem zweiten Schritt den Halbleiterschalter elektrisch nichtleitend schaltet und anschließend den ersten Schalter öffnet,
wobei der Energiespeicher derart ausgebildet ist, dass er die Ausgabe der erforderlichen Schaltsignale für die ersten und zweiten Schritte sicherstellt und wobei dadurch, dass mittels des Energiespeichers die Energiepufferung auf der zum Versorgungsanschluss gerichteten Primärseite des Netzteils erfolgt, bei einem Spannungseinbruch am Versorgungsanschluss die Sekundärseite des Netzteils ihren Spannungspegel bis zu einem gewissen Zeitpunkt konstant halten kann und der Spannungseinbruch auf der Sekundärseite erst nach der Beendigung der gesteuerten Abschaltsequenz, gebildet durch den ersten und zweiten Schritt, auftritt, und ein Verfahren gemäß Anspruch 7, d.h. durch ein Verfahren eines Schaltgeräts, welches eine Steuereinheit, einen Versorgungsanschluss, ein Netzteil, welches ein geräteinternes Netzteil des Schaltgerätes ist und die am Versorgungsanschluss anliegende Spannung in eine andere Spannung umwandelt, und eine erste Strombahn, die mit einem Versorgungsnetz verbunden ist, umfasst, wobei die erste Strombahn einen ersten elektromechanischen Schalter und eine in Reihe zum ersten Schalter geschaltete Parallelschaltung eines zweiten elektromechanischen Schalters mit einem Halbleiterschalter umfasst, wobei die Steuereinheit ein Schaltsignal für den ersten Schalter, den zweiten Schalter und den Halbleiterschalter ausgeben kann, wobei der Versorgungsanschluss mit dem Netzteil verbunden ist und die Steuereinheit über das Netzteil die Energie für die Schaltsignale bezieht, wobei das Schaltgerät einen Energiespeicher und eine mit der Steuereinheit verbundene Messvorrichtung umfasst, wobei der Energiespeicher zwischen dem Versorgungsanschluss und dem Netzteil zwischengeschaltet ist, so dass mittels des Energiespeichers die über den Versorgungsanschluss erfolgende Energieversorgung des Schaltgerätes durch eine Versorgungsquelle geräteintern gepuffert wird, wobei die Steuereinheit mittels der Messvorrichtung die über den Versorgungsanschluss erfolgende Energieversorgung des Schaltgerätes im Bereich zwischen dem Versorgungsanschluss und dem Netzteil überwacht, wobei die Steuereinheit, wenn die mittels der Messvorrichtung überwachte Energieversorgung in einen kritischen Bereich fällt, mittels der Energie des Energiespeichers:
- in einem ersten Schritt den Halbleiterschalter elektrisch leitend schaltet und anschließend den zweiten Schalter öffnet,
- nach dem ersten Schritt in einem zweiten Schritt den Halbleiterschalter elektrisch nichtleitend schaltet und anschließend den ersten Schalter öffnet,
wobei der Energiespeicher derart ausgebildet ist, dass er die Ausgabe der erforderlichen Schaltsignale für die ersten und zweiten Schritte sicherstellt und wobei dadurch, dass mittels des Energiespeichers die Energiepufferung auf der zum Versorgungsanschluss gerichteten Primärseite des Netzteils erfolgt, bei einem Spannungseinbruch am Versorgungsanschluss die Sekundärseite des Netzteils ihren Spannungspegel bis zu einem gewissen Zeitpunkt konstant halten kann und der Spannungseinbruch auf der Sekundärseite erst nach der Beendigung der gesteuerten Abschaltsequenz, gebildet durch den ersten und zweiten Schritt, auftritt.

Vorteilhafte Weiterbildungen der Erfindung sind in den abhängigen Ansprüchen 2 bis 6 sowie 8 angegeben.

Im aktiven Betrieb des dem Schaltgerät nachgeschalteten Elektromotors erfolgt über die erste Strombahn die Energiezufuhr für den Elektromotor.

Bei Vorliegen des Schaltsignals der Steuereinheit nimmt der erste und zweite Schalter den geschlossenen Schaltzustand ein. Wird das Schaltsignal am ersten und/oder zweiten Schalter abgeschaltet; d.h. am Schalter liegt kein Schaltsignal an, so nimmt der entsprechende Schalter automatisch den geöffneten Schaltzustand ein. Bei einem Schaltsignal liegt insbesondere eine Spannung über dem Steuerstromkreis des Schalters an, insbesondere ca. 12 Volt. Bei keinem Schaltsignal liegt insbesondere keine Spannung über dem Steuerstromkreis des Schalters an.

Die Steuereinheit kann mittels der Messvorrichtung die über den Versorgungsanschluss erfolgende Energieversorgung für das Schaltsignal der Steuereinheit überwachen. Dadurch, dass mittels der Messvorrichtung der Energiefluss, insbesondere die Spannung, im Bereich der elektrischen Verbindung zwischen dem Versorgungsanschluss und dem Netzteil, vorzugsweise im Bereich der elektrischen Verbindung zwischen dem Versorgungsanschluss und dem Energiespeicher, überwacht wird, kann die über den Versorgungsanschluss direkt am Schaltgerät eingespeiste Spannung der Versorgungsquelle überwacht werden. Auf diese Weise kann seitens der Steuereinheit unmittelbar auf einen Spannungsabfall am Versorgungsanschluss reagiert werden.

Durch die Überwachung der über den Versorgungsanschluss erfolgenden Energieversorgung mittels der Messvorrichtung kann bei einem Absinken der Versorgungsspannung in einen, vorzugsweise in der Steuereinheit oder Messvorrichtung hinterlegten, kritischen Bereich ein gesteuertes Abschalten der über die erste Strombahn erfolgenden Energieversorgung des nachgeschalteten Elektromotors erfolgen.

Der kritische Bereich wird vorzugsweise mittels eines Referenzwertes vom ordnungsgemäßen Bereich, in welchem eine ordnungsgemäße Energieversorgung des Schaltgerätes über den Versorgungsanschluss vorliegt, getrennt. Der Referenzwert ist somit ein Schwellwert bzw. Schwellwertbereich. Der Referenzwert ist insbesondere derart bemessen, dass, sofern der Referenzwert überschritten wird eine ausreichende Energieversorgung des Schaltgerätes über den Versorgungsanschluss erfolgt, so dass eine ordnungsgemäße Schaltsignalausgabe durch die Steuereinheit sichergestellt ist, und sofern der Referenzwert unterschritten wird eine Energieversorgung über den Versorgungsanschluss erfolgt, welche eine ordnungsgemäße Schaltsignalausgabe durch die Steuereinheit gefährdet, insbesondere nicht ermöglicht.

Der kritische Bereich charakterisiert insbesondere einen Spannungsbereich am Versorgungsanschluss, welcher unterhalb von ca. 70%, vorzugsweise ca. 50%, der am Versorgungsanschluss anzuschließenden maximal zulässigen Spannung liegt.

Die Messvorrichtung ist insbesondere eine Vorrichtung zum Messen der am Versorgungsanschluss anliegenden Versorgungsspannung, so dass die Steuereinheit mittels der Messvorrichtung die über den Versorgungsanschluss anliegende Versorgungsspannung überwachen kann. Die Messung mittels der Messvorrichtung findet insbesondere im Bereich zwischen den Anschlussstellen des Versorgungsanschlusses und dem Netzteil, vorzugsweise dem Energiespeicher, statt.

Die Steuereinheit selbst kann den Energiespeicher umfassen.

Über den Versorgungsanschluss erfolgt vorzugsweise lediglich die geräteinterne Energieversorgung des Schaltgeräts.

Vorzugsweise liegen am Versorgungsanschluss im ordnungsgemäßen Betrieb des Schaltgeräts ca. 24 Volt an.

Das Netzteil ist ein geräteinternes Netzteil des Schaltgerätes, welches insbesondere die am Versorgungsanschluss anliegende Spannung in eine andere Spannung umwandelt.

Der Halbleiterschalter ist vorzugsweise ein Triac oder zwei antiparallel geschaltete Thyristoren.

Wurde eine kritische Energieversorgung mittels der Messvorrichtung detektiert (die Energieversorgung über den Versorgungsanschluss liegt im kritischen Bereich), so erfolgt die Ansteuerung mittels der Steuereinheit derart, dass im ersten Schritt der Halbleiterschalter elektrisch leitend geschaltet wird und der zweite Schalter nach dem Schließen des Halbleiterschalters geöffnet wird. Im ersten Schritt bleibt der erste Schalter geschlossen. Im zweiten Schritt wird zunächst der Halbleiterschalter elektrisch nichtleitend geschaltet und anschließend der erste Schalter geöffnet. Die erforderliche Energie zur Ausgabe der notwendigen Schaltsignale für den ersten und zweiten Schritt bezieht die Steuereinheit vom Energiespeicher.

Der Energiespeicher, welcher insbesondere durch mindestens einen Kondensator ausgebildet ist, ist zwischen dem Versorgungsanschluss und dem Netzteil zwischengeschaltet, so dass er die über den Versorgungsanschluss erfolgende Energieversorgung des Schaltgerätes geräteintern puffert. Der Energiespeicher wird insbesondere über die am Versorgungsanschluss anliegende Spannung aufgeladen. Sinkt die am Versorgungsanschluss anliegende Spannung in den kritischen Bereich, so wird das Ausgeben der erforderlichen Schaltsignale für den ersten und zweiten Schritt durch die Steuereinheit durch die im Energiespeicher gepufferte Energie sichergestellt. Dadurch, dass der Energiespeicher direkt mittels der am Versorgungsanschluss anliegenden Spannung aufgeladen wird, kann bei einer entsprechenden Dimensionierung des Energiespeichers eine gesteuerte Abschaltung des nachgeschalteten Elektromotors (Durchführen des ersten und zweiten Schritts) bei einem konstanten Spannungsniveau erfolgen. Der Spannungseinbruch auf der Sekundärseite des Netzteils tritt erst nach Durchführung des ersten und zweiten Schrittes ein.

Die gesteuerte Abschaltung des nachgeschalteten Elektromotors mittels des ersten und zweiten Schritts erfolgt insbesondere unmittelbar nachdem festgestellt wurde, dass die mittels der Messvorrichtung erfasste Spannung im kritischen Bereich liegt.

Ein mit der Erfindung erzielte Vorteil besteht darin, dass mit geringem zusätzlichem Hardwareaufwand im Schaltgerät ein verbessertes Schaltverhalten erzielt werden kann. Insbesondere kann bezüglich einer Notabschaltung über den Versorgungsanschluss eine erhöhte Anzahl an Schaltspielen für das Schaltgerät erzielt werden. Der durch ein Abschalten der Versorgungsspannung an den Schaltern üblicherweise erfolgende Verschleiß kann durch das gesteuerte Abschalten verhindert werden. Die hierzu erforderlich Energie für das Schaltsignal wird durch den Energiespeicher bereitgestellt. Dadurch, dass der Energiespeicher auf der Primärseite des Netzteils (zum Versorgungsanschluss gerichtete Seite des Netzteils) angeordnet ist, kann eine verbesserte geräteinterne Energiepufferung erfolgen.

In einer vorteilhaften Ausführungsform der Erfindung kann der Energiespeicher über den Versorgungsanschluss aufgeladen werden. Der Energiespeicher umfasst vorzugsweise mindestens einen Kondensator, welcher mit dem Versorgungsanschluss elektrisch leitend verbunden ist. Es ist ebenso denkbar, dass als Energiespeicher mehrere Kondensatoren eingesetzt werden.

Gemäß der Erfindung ist der Energiespeicher derart ausgebildet, dass er die Ausgabe der erforderlichen Schaltsignale mittels der Steuereinheit für die ersten und zweiten Schritte sicherstellt. Die Ausgabe der ersten und zweiten Schaltsignale über die Steuereinheit ist somit lediglich mittels der im Energiespeicher gepufferten Energie möglich.

In einer weiteren vorteilhaften Ausführungsform der Erfindung umfasst das Schaltgerät eine weitere Messvorrichtung, welche mit der Steuereinheit verbunden ist, wobei die Steuereinheit mittels der weiteren Messvorrichtung die über den Versorgungsanschluss erfolgende Energieversorgung im Bereich zwischen dem Netzteil und der Steuereinheit überwachen kann. Mittels der weiteren Messvorrichtung kann somit die Energieversorgung auf der Sekundärseite des Netzteils überwacht werden.

In einer weiteren vorteilhaften Ausführungsform der Erfindung umfasst das Schaltgerät eine zweite Strombahn, welche einen ersten elektromechanischen Schalter und eine in Reihe zum ersten Schalter geschaltete Parallelschaltung eines zweiten elektromechanischen Schalters mit einem Halbleiterschalter umfasst, wobei die Steuereinheit ein Schaltsignal für den ersten Schalter, den zweiten Schalter und den Halbleiterschalter der zweiten Strombahn ausgeben kann, wobei die Steuereinheit derart ausgebildet ist, dass sie, sofern die mittels der Messvorrichtung überwachte Energieversorgung in einen kritischen Bereich fällt, mittels der Energie des Energiespeichers:
- in einem ersten Schritt den Halbleiterschalter der zweiten Strombahn elektrisch leitend schaltet und anschließend den zweiten Schalter der zweiten Strombahn öffnet,
- nach dem ersten Schritt in einem zweiten Schritt den Halbleiterschalter der zweiten Strombahn elektrisch nichtleitend schaltet und anschließend den ersten Schalter der zweiten Strombahn öffnet.

Die Ansteuerung der zweiten Strombahn mittels der Steuereinheit erfolgt vorzugsweise analog zur ersten Strombahn. Die zweite Strombahn ist vorzugsweise analog zur ersten Strombahn ausgebildet.

Das Schaltgerät kann ferner eine dritte Strombahn umfassen. Die dritte Strombahn kann hierbei analog zur ersten oder zweiten Strombahn ausgebildet sein. Die Ansteuerung der Schalter der dritten Strombahn kann ebenso in analoger Weise zur ersten Strombahn erfolgen.

In einer weiteren vorteilhaften Ausführungsform der Erfindung ist die Steuereinheit derart ausgebildet, dass sie im zweiten Schritt den Halbleiterschalter im Stromnulldurchgang, der über ihn erfolgenden Energiezufuhr, in den elektrisch nichtleitenden Zustand schaltet. Hierdurch wird die Energieversorgung zum Elektromotor unterbrochen, so dass anschließend der erste Schalter der jeweiligen Strombahn stromlos geöffnet werden kann. Das Abschalten der Energieversorgung zum nachgeschalteten Elektromotor kann somit ohne Lichtbogenbildung an den jeweiligen elektromechanischen Schaltern erfolgen. Der ansonsten erfolgende Verschleiß der Schalter wird vermieden.

In einer weiteren vorteilhaften Ausführungsform der Erfindung umfasst ein System, zum sicheren Betreiben eines Elektromotors, das beschriebene Schaltgerät, eine Versorgungsquelle und eine Schaltvorrichtung, wobei die Schaltvorrichtung in den Versorgungsstrang der Versorgungsquelle zum Versorgungsanschluss des Schaltgeräts derart zwischengeschaltet ist, dass durch eine Betätigung der Schaltvorrichtung eine durch die Versorgungsquelle erfolgende Energieversorgung zum Schaltgerät unterbrochen wird. Die Schaltvorrichtung ist beispielsweise ein Not-Aus-Schaltgerät.

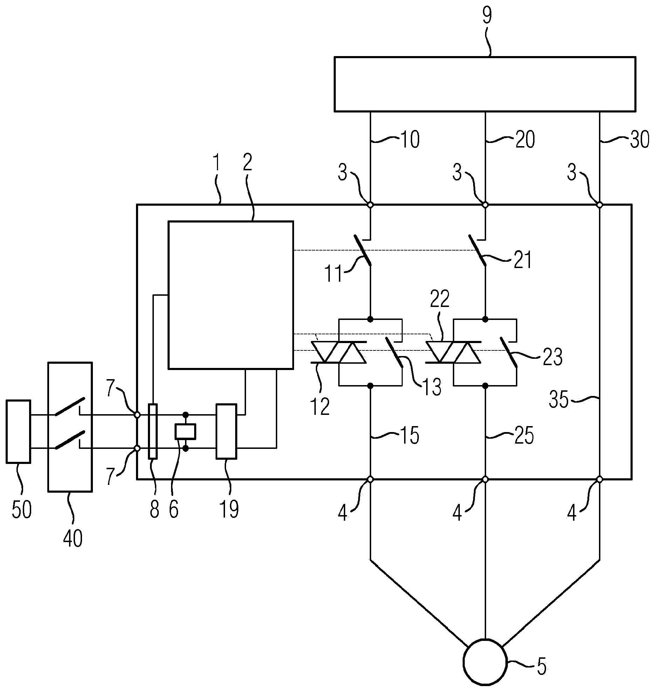

Im Folgenden werden die Erfindung und Ausgestaltungen der Erfindung anhand des in der Figur dargestellten Ausführungsbeispiels näher beschrieben und erläutert.

Die Figur zeigt eine schematische Darstellung eines Systems zum sicheren Betreiben eines Elektromotors 5. Das System umfasst ein Versorgungsnetz 9, den Elektromotor 5, ein Schaltgerät 1, eine Versorgungsquelle 50 und ein Not-Aus-Schaltgerät 40.

Das Schaltgerät 1 ist mit seinen drei eingangsseitigen Anschlussstellen 3 mit dem Versorgungsnetz 9 und mit seinen drei ausgangsseitigen Anschlussstellen 4 mit dem Elektromotor 5 verbunden. Der Elektromotor 5 ist ein Asynchronmotor. Das Versorgungsnetz 9 ist ein Dreiphasenwechselstromnetz einer industriellen Niederspannungsschaltanlage. Das Schaltgerät 1 ist ein Motorstarter 1, mittels welchem die Energiezufuhr des nachgeschalteten Elektromotors 5 gesteuert werden kann.

Eine erste Phase 10 des Versorgungsnetzes 9 ist mittels einer Leitung mit der eingangsseitigen Anschlussstelle 3 verbunden und wird über eine erste Strombahn 15 des Motorstarters 1 geräteintern zur ausgangsseitigen Anschlussstelle 4 geführt und anschließend mittels einer weiteren Leitung zum Elektromotor 5 geführt. Die erste Strombahn 15 des Motorstarters 1 verbindet geräteintern die eingangsseitige Anschlussstelle 3 des Motorstarters 1 mit der ausgangsseitigen Anschlussstelle 4 des Motorstarters 1. Die erste Strombahn 15 umfasst einen ersten elektromechanischen Schalter 11, einen Halbleiterschalter 12, hier ein Triac, und einen zweiten elektromechanischen Schalter 13. Der erste Schalter 11 ist in Serie zu der Parallelschaltung des Halbleiterschalters 12 mit dem zweiten Schalter 13 geschaltet. Über die erste Strombahn 15 wird folglich die erste Phase 10 des Versorgungsnetzes 9 zum Elektromotor 5 geführt.

Eine zweite Phase 20 des Versorgungsnetzes 9 ist mittels einer Leitung mit der eingangsseitigen Anschlussstelle 3 verbunden und wird über eine zweite Strombahn 25 des Motorstarters 1 geräteintern zur ausgangsseitigen Anschlussstelle 4 geführt und anschließend mittels einer weiteren Leitung zum Elektromotor 5 geführt. Die zweite Strombahn 25 des Motorstarters 1 verbindet geräteintern die eingangsseitige Anschlussstelle 3 des Motorstarters 1 mit der ausgangsseitigen Anschlussstelle 4 des Motorstarters 1. Die zweite Strombahn 25 umfasst einen ersten elektromechanischen Schalter 21, einen Halbleiterschalter 22, hier ein Triac, und einen zweiten elektromechanischen Schalter 23. Der erste Schalter 21 ist in Serie zu der Parallelschaltung des Halbleiterschalters 22 mit dem zweiten Schalter 23 geschaltet. Über die zweite Strombahn 25 wird folglich die zweite Phase 20 des Versorgungsnetzes 9 zum Elektromotor 5 geführt.

Eine dritte Phase 30 des Versorgungsnetzes 9 ist mittels einer Leitung mit der eingangsseitigen Anschlussstelle 3 verbunden und wird über eine dritte Strombahn 35 des Motorstarters 1 geräteintern zur ausgangsseitigen Anschlussstelle 4 geführt und anschließend mittels einer weiteren Leitung zum Elektromotor 5 geführt. Die dritte Strombahn 35 des Motorstarters 1 verbindet geräteintern die eingangsseitige Anschlussstelle 3 des Motorstarters 1 mit der ausgangsseitigen Anschlussstelle 4 des Motorstarters 1. Der abgebildete Motorstarter 1 ist ein 2-phasig gesteuerter Motorstarter 1, so dass die dritte Strombahn eine beständige geräteinterne elektrische Kontaktierung zwischen der eingangsseitigen und ausgangsseitigen Anschlussstelle 3,4 bildet. Es ist jedoch ebenso denkbar, dass die dritte Strombahn 35 ebenso mindestens einen Schalter umfasst oder analog zur ersten und/oder zweiten Strombahn 15,25 des Motorstarters 1 ausgebildet ist.

Der Motorstarter 1 umfasst eine Steuereinheit 2 mittels welcher die Schaltstellung der elektromechanischen Schalter 11,13,21,23 und der Halbleiterschalter 12,22 gesteuert wird. Hierfür kann die Steuereinheit 2 Schaltsignale an die Schalter 11,12,13,21,22,23 ausgeben. Durch das Schaltsignal wird eine Spannung am Schalter 11,12,13,21,22,23 angelegt. Die elektromechanischen Schalter 11,13,21,23 sind mit einer Federkraft beaufschlagt, so dass sie zum Halten der geschlossenen Stellung mit dem Schaltsignal angesteuert werden müssen, da sie ansonsten selbständig den geöffneten Schaltzustand einnehmen. D.h. sobald das Schaltsignal am elektromechanischen Schalter 11,13,21,23 entfernt wird, nimmt dieser automatisch die geöffnete Schaltstellung ein. Mittels der Steuereinheit 2 kann der jeweilige Halbleiterschalter 12,22 in einen elektrisch leitenden Zustand und einen elektrisch nicht leitenden Zustand (gesperrten Zustand) geschaltet werden. Im elektrisch nicht leitenden Zustand des Halbleiterschalters 12,22 wird die Energieübertragung über den Halbleiterschalter 12,22 gesperrt.

Die ersten elektromechanischen Schalter 13,23 sind Schließer eines ersten Relais. Die zweiten elektromechanischen Schalter 11,21 sind Schließer eines zweiten Relais. Es ist jedoch ebenso denkbar, dass die einzelnen Schalter oder lediglich die ersten oder zweiten Schalter 11,13,21,23 mittels eines separaten Relais angesteuert werden.

Der Motorstarter 1 bezieht über seinen Versorgungsanschluss 7 die geräteinterne Energieversorgung. Hierfür ist der Versorgungsanschluss 7 mittels zweier Leiter mit einer Versorgungsquelle 50, welche z.B. ca. 24 Volt bereitstellt, verbunden. Am Versorgungsanschluss 7 liegt somit bei einer bestehenden elektrisch leitenden Verbindung zur Versorgungsquelle 7 eine Versorgungsspannung von ca. 24 Volt an. Mittels der über den Versorgungsanschluss 7 bezogenen elektrischen Energie kann die Steuereinheit 2 die erforderlichen Schaltsignale an die jeweiligen Schalter 11,12,13,21,22,23 ausgegeben.

Innerhalb des Motorstarters 1 ist der Versorgungsanschluss 7 mit einem Netzteil 19 des Schaltgerätes 1 elektrisch leitend verbunden. Das Netzteil 19 passt die über den Versorgungsanschluss 7 bezogene Spannung der Spannungsquelle 50 derart an, dass die Steuereinheit 2 über das Netzteil 19 die passende elektrische Spannung für die Schaltsignale beziehen kann.

Der Motorstarter 1 umfasst ferner einen Energiespeicher 6, welcher in der elektrisch leitenden Verbindung des Versorgungsanschlusses 7 zum Netzteil 19 integriert ist. Der Energiespeicher 6 ist ein Kondensator, welcher über den Versorgungsanschluss 7 aufgeladen wird. Der Energiespeicher 6 kann die Energieversorgung des Netzteils 19 puffern. Sofern die Energieversorgung des Schaltgerätes über die Versorgungsquelle 50 entfällt, wird mittels des Energiespeichers 6 die Energieversorgung des Netzteils 19 entsprechend der Kapazität des Energiespeichers 6 gepuffert; d.h. kurzzeitig aufrechterhalten. Die Kapazität des Energiespeichers 6 ist derart ausgelegt, dass eine Energieversorgung des Netzteils 19 lediglich mittels der Energie des Energiespeichers 6 solange sichergestellt ist, dass die Steuereinheit 2 ein gesteuertes Abschalten des nachgeschalteten Verbrauchers 5 durchführen kann (Durchführen des ersten und zweiten Schrittes).

Zwischen dem Versorgungsanschluss 7 und dem Energiespeicher 6 ist eine Messvorrichtung 8 des Motorstarters 1 angeordnet. Die Steuereinheit 2 kann mittels der Messvorrichtung 8 die über den Versorgungsanschluss 7 erfolgende Energieversorgung des Netzteils 19 überwachen. Hierbei wird die mittels der Messvorrichtung 8 ermittelte Spannung mit einem im Schaltgerät 1 hinterlegten Referenzwert verglichen. Liegt die ermittelte Spannung oberhalb des Referenzwertes, so erfolgt über den Versorgungsanschluss 7 für das Schaltgerät 1 eine ausreichende Energieversorgung, welche eine ordnungsgemäße Schaltsignalausgabe durch die Steuereinheit 2 sichergestellt. Wird durch die ermittelte Spannung jedoch der Referenzwert unterschritten, so erfolgt über den Versorgungsanschluss 7 eine Energieversorgung, welche eine ordnungsgemäße Schaltsignalausgabe durch die Steuereinheit 2 gefährdet. Die über den Versorgungsanschluss 7 erfolgende Energieversorgung befindet sich somit im kritischen Bereich. Der durch den Referenzwert gebildete Schwellwert bezüglich der überwachten Versorgungsspannung liegt bei 50% der am Versorgungsanschluss 7 anzuschließenden maximal zulässigen Spannung. Ergibt die Überwachung der Versorgungsspannung mittels der Messvorrichtung 8, dass am Versorgungsanschluss 7 eine Spannung unterhalb von 50% der am Versorgungsanschluss 7 anzuschließenden maximal zulässigen Spannung anliegt, so befindet sich die Energieversorgung im kritischen Bereich. Wird ein derartiger Zustand detektiert, so wird durch die Steuereinheit 2 unmittelbar ein gesteuertes Abschalten mittels der vom Energiespeicher 6 gepufferten Energie durchgeführt.

Zwischen der Versorgungsquelle 50 und dem Motorstarter 1 ist das Not-Aus-Schaltgerät 40 derart angeordnet, dass es die über die beiden Leiter erfolgende Energieversorgung des Motorstarters 1 unterbrechen kann. Das Not-Aus-Schaltgerät 40 umfasst hierfür jeweils zwei Schaltelemente, welche jeweils eine Leitung unterbrechen können.

Sofern am Versorgungsanschluss 7 eine ordnungsgemäße Versorgungsspannung anliegt kann der Motorstarter 1 für den nachgeschalteten Elektromotor 5 eine Energieversorgung herstellen. Die mittels der Messvorrichtung 8 ermittelte Versorgungsspannung liegt folglich nicht im kritischen Bereich.

Liegt ein laufender Elektromotor 5 im Nennbetrieb vor, so sind innerhalb des Motorstarters 1 die ersten Schalter 11,21 geschlossen, die Halbleiterschalter 12,22 elektrisch nicht leitend geschaltet und die zweiten Schalter 13,23 geschlossen. Ein mögliches Abschaltprinzip des dem Motorstarter 1 nachgeschalteten Elektromotors 5 ist es, die Versorgungsspannung des Motorstarters 1 mittels des in den Versorgungsstrang zwischen der Versorgungsquelle 50 und dem Versorgungsanschluss 7 zwischengeschalteten Not-Aus-Schaltgeräts 40 abzuschalten. Hierfür wird das Not-Aus-Schaltgerät 40 betätigt, so dass es mindestens eines seiner Schaltelemente öffnet.

Erfolgt eine derartige Betätigung des Not-Aus-Schaltgeräts 40, so liegt über den Versorgungsanschluss 7 keine Spannung an. Die Versorgungsspannung am Versorgungsanschluss 7 fällt somit in den kritischen Bereich. Da die Steuereinheit 2 mittels der Messvorrichtung 8 die über den Versorgungsanschluss 7 erfolgende Energieversorgung überwacht, wird ein derartiger Zustandswechsel bezüglich der über den Versorgungsanschluss 7 erfolgenden Energieversorgung erkannt. Die Steuereinheit 2 führt daraufhin selbständig ein gesteuertes Abschalten des nachgeschalteten Elektromotors 5 durch. Die Energie zur Ausgabe der notwendigen Schaltsignale wird hierbei durch den Energiespeicher 6 sichergestellt. Mittels der im Energiespeicher 6 gepufferten Energie wird folglich weiterhin das Netzteil 19 und hierüber die Steuereinheit 2 mit Energie versorgt.

Bei dem gesteuerten Abschalten des nachgeschalteten Motors 5 werden durch die Steuereinheit 2 in einem ersten Schritt die Halbleiterschalter 12,22 in den elektrisch leitenden Zustand geschaltet. Die ersten Schalter 11,21 werden weiterhin mittels eines Schaltsignals der Steuereinheit 2 angesteuert, so dass sie in der geschlossenen Stellung verweilen. Funktionsbedingt fallen durch das Wegschalten der Schaltsignale am ersten Relais die zweiten Schalter 13,23 selbsttätig in den geöffneten Zustand. Die Energieversorgung des Elektromotors 5 erfolgt somit weiterhin über den Motorstarter 1. Die notwendige Energie für die auszugebenden Schaltsignale (Halbleiterschalter 12,22 und ersten Schalter 11,21) während des ersten Schritts durch die Steuereinheit 2 wird durch den Energiespeicher 6 bereitgestellt.

In einem auf den ersten Schritt folgenden zweiten Schritt werden durch die Steuereinheit 2 die Halbleiterschalter 12,22 im Stromnulldurchgang in den elektrisch nichtleitenden Zustand geschaltet. Es erfolgt somit ein lichtbogenfreies Unterbrechen der Energieversorgung über der ersten und zweiten Strombahn 15,25. Dieser Schaltvorgang erfolgt unmittelbar nachdem sichergestellt ist, dass die zweiten Schalter 13,23 geöffnet sind. Sobald die Energieversorgung über die Halbleiterschalter 12,22 unterbrochen ist, ist die Energieversorgung zum nachgeschalteten Elektromotor 5 unterbrochen. Nachdem sichergestellt ist, dass die Energieversorgung über die Halbleiterschalter 12,22 unterbrochen ist, wird das Schaltsignal vom zweiten Relais und somit von den ersten Schaltern 11,21 weggeschaltet. Funktionsbedingt fallen durch das Wegschalten des Schaltsignals am zweiten Relais die ersten Schalter 11,21 selbsttätig in den geöffneten Zustand. Die ersten Schalter 11,21 werden somit stromlos geöffnet. Die Energie für die auszugebenden Schaltsignale während des zweiten Schritts durch die Steuereinheit 2 wird durch den Energiespeicher 6 bereitgestellt.

Durch eine ausreichend bemessene Pufferung der Versorgungsspannung im Energiespeicher 6 und die interne Überwachung der am Versorgungsanschluss 7 anliegenden Versorgungsspannung mittels der Messvorrichtung 8, kann bei dem Abschalten der Versorgungsspannung ein gesteuertes Unterbrechen der Energieversorgung zum nachgeschalteten Elektromotor 5 erfolgen, ohne dass es zu einer Lichtbogenbildung an den Schaltern 11,13,21, 23 kommt. Der Verschleiß des Schaltgeräts 1 kann somit minimiert werden.

Sinkt durch Ausfall oder Abschalten der Versorgungsspannung die von der Messvorrichtung 8 erfasste Versorgungsspannung unter eine vorgegebene Schwelle (Referenzwert), so wird durch die Steuereinheit 2 unverzüglich das gesteuerte Abschalten des Elektromotors 5 eingeleitet (Durchführen des ersten und zweiten Schritts). Das gesteuerte Abschalten entspricht vorzugsweise dem Abschaltvorgang, welchen das Schaltgerät 1 bei einem normalen Abschaltvorgang (betriebsmäßiges Abschalten des Elektromotors 5 über Steuereingang) über die Steuereinheit 2 durchführt.

Die Pufferung des Energiespeichers 6 ist derart ausgelegt, dass ausreichend Energie zum Ansteuern der Schalter 11,12,13, 21,22,23 bis zum Ende des gesteuerten Abschaltvorgangs zur Verfügung steht. Auf diese Weise kann auch bei einer Notabschaltung ein regulärer Abschaltvorgang durchgeführt werden, ohne die mechanischen Schalter 11,13,21,23 zusätzlich zu belasten. Es erfolgt somit ein verschleißfreies Abschalten bei einem Nothalt, der durch Abschalten der Versorgungsspannung realisiert ist. Durch den gesteuerten Abschaltvorgang über verschleißfreie Halbleiterschalter 12,22 und die Pufferung der Versorgungsspannung für die Dauer des gesteuerten Abschaltvorganges kann eine deutlich erhöhte Lebensdauer der mechanischen Schalter 11,13,21,23 und damit des gesamten Schaltgerätes 1 erreicht werden.

Dadurch, dass mittels des Energiespeichers 6 die Energiepufferung auf der Primärseite des Netzteils 19 (zum Versorgungsanschluss 7 gerichtet) erfolgt, kann bei einem Spannungseinbruch am Versorgungsanschluss 7 die Sekundärseite des Netzteils 19 ihren Spannungspegel bis zu einem gewissen Zeitpunkt konstant halten. Auf diese Weise kann die Abschaltung dauerhaft auf einem konstanten Spannungsniveau durchgeführt werden. Der Spannungseinbruch auf der Sekundärseite tritt erst nach der Beendigung der gesteuerten Abschaltsequenz (erster und zweiter Schritt) auf. Dadurch, dass der Energiespeicher 6 auf der Primärseite angeordnet ist, kann im Vergleich zu einer Anordnung des Energiespeichers 6 auf der Sekundärseite des Netzteils 19 ein Spannungsabfall am Versorgungsanschluss 7 und somit der kritische Bereich schneller detektiert werden, so dass die gesteuerte Abschaltsequenz früher eingeleitet werden kann. Die Notabschaltung wird somit frühzeitiger eingeleitet. Die Zuverlässigkeit des Systems wird hierdurch verbessert.

Vorzugsweise wird bei einem Eintritt in den kritischen Bereich mittels der gepufferten Energie des Energiespeichers 6 ferner eine Diagnosemeldung (z.B. Meldung der regulären Abschaltung) über ein Kommunikationsmittel des Schaltgerätes 1 an ein mit dem Schaltgerät verbundene Geräteeinheit (z.B. eine übergeordnete Steuerung) abgesetzt.

## Patentansprüche

1. Schaltgerät (1) mit einer Steuereinheit (2), einem Versorgungsanschluss (7), einem Netzteil (19), welches ein geräteinternes Netzteil (19) des Schaltgerätes (1) ist und die am Versorgungsanschluss (7) anliegende Spannung in eine andere Spannung umwandelt, und einer ersten Strombahn (15), die mit einem Versorgungsnetz (9) verbunden ist, die einen ersten elektromechanischen Schalter (11) und eine in Reihe zum ersten Schalter (11) geschaltete Parallelschaltung eines zweiten elektromechanischen Schalters (13) mit einem Halbleiterschalter (12) umfasst, wobei die Steuereinheit (2) ein Schaltsignal für den ersten Schalter (11), den zweiten Schalter (13) und den Halbleiterschalter (12) ausgeben kann, wobei der Versorgungsanschluss (7) mit dem Netzteil (19) verbunden ist und die Steuereinheit (2) über das Netzteil (19) die Energie für die Schaltsignale bezieht,
**dadurch gekennzeichnet, dass**
das Schaltgerät (1) einen Energiespeicher (6) und eine mit der Steuereinheit (2) verbundene Messvorrichtung (8) umfasst, wobei der Energiespeicher (6) zwischen dem Versorgungsanschluss (7) und dem Netzteil (19) zwischengeschaltet ist, so dass mittels des Energiespeichers (6) eine über den Versorgungsanschluss (7) erfolgende Energieversorgung des Schaltgerätes (1) durch eine Versorgungsquelle (50) geräteintern gepuffert wird, wobei die Steuereinheit (2) mittels der Messvorrichtung (8) die über den Versorgungsanschluss (7) erfolgende Energieversorgung des Schaltgerätes im Bereich zwischen dem Versorgungsanschluss (7) und dem Netzteil (19) überwachen kann, wobei die Steuereinheit (2) derart ausgebildet ist, dass sie, wenn die mittels der Messvorrichtung überwachte Energieversorgung in einen kritischen Bereich fällt, mittels der Energie des Energiespeichers (6):
- in einem ersten Schritt den Halbleiterschalter (12) elektrisch leitend schaltet und anschließend den zweiten Schalter (13) öffnet,
- nach dem ersten Schritt in einem zweiten Schritt den Halbleiterschalter (12) elektrisch nichtleitend schaltet und anschließend den ersten Schalter (11) öffnet,
wobei der Energiespeicher (6) derart ausgebildet ist, dass er die Ausgabe der erforderlichen Schaltsignale für die ersten und zweiten Schritte sicherstellt und
wobei dadurch, dass mittels des Energiespeichers (6) die Energiepufferung auf der zum Versorgungsanschluss (7) gerichteten Primärseite des Netzteils (19) erfolgt, bei einem Spannungseinbruch am Versorgungsanschluss (7) die Sekundärseite des Netzteils (19) ihren Spannungspegel bis zu einem gewissen Zeitpunkt konstant halten kann und der Spannungseinbruch auf der Sekundärseite erst nach der Beendigung der gesteuerten Abschaltsequenz, gebildet durch den ersten und zweiten Schritt, auftritt.

2. Schaltgerät nach Anspruch 1, wobei der Energiespeicher (6) über den Versorgungsanschluss (7) aufgeladen werden kann.

3. Schaltgerät nach einem der vorhergehenden Ansprüche, wobei das Schaltgerät eine zweite Messvorrichtung (60), welche mit der Steuereinheit (2) verbunden ist, umfasst, wobei die Steuereinheit (2) mittels der zweiten Messvorrichtung (8) die über den Versorgungsanschluss (7) erfolgende Energieversorgung im Bereich zwischen dem Netzteil (19) und der Steuereinheit (2) überwachen kann.

4. Schaltgerät nach einem der vorhergehenden Ansprüche, wobei das Schaltgerät eine zweite Strombahn (25) umfasst, welche einen ersten elektromechanischen Schalter (21) und eine in Reihe zum ersten Schalter (21) geschaltete Parallelschaltung eines zweiten elektromechanischen Schalters (23) mit einem Halbleiterschalter (22) umfasst, wobei die Steuereinheit (2) ein Schaltsignal für den ersten Schalter (21), den zweiten Schalter (23) und den Halbleiterschalter (22) der zweiten Strombahn (25) ausgeben kann, wobei die Steuereinheit (2) derart ausgebildet ist, dass sie, sofern die mittels der Messvorrichtung (8) überwachte Energieversorgung in einen kritischen Bereich fällt, mittels der Energie des Energiespeichers (6):
- in einem ersten Schritt den Halbleiterschalter (22) der zweiten Strombahn (25) elektrisch leitend schaltet und anschließend den zweiten Schalter (23) der zweiten Strombahn (25) öffnet,
- nach dem ersten Schritt in einem zweiten Schritt den Halbleiterschalter (22) der zweiten Strombahn (25) elektrisch nichtleitend schaltet und anschließend den ersten Schalter (21) der zweiten Strombahn (25) öffnet.

5. Schaltgerät nach einem der vorhergehenden Ansprüche, wobei die Steuereinheit (2) derart ausgebildet ist, dass sie im zweiten Schritt den Halbleiterschalter (12,22) im Stromnulldurchgang, der über ihn erfolgenden Energiezufuhr, in den elektrisch nichtleitenden Zustand schaltet.

6. System, zum sicheren Betreiben eines Elektromotors (5), mit einem Schaltgerät (1) gemäß einem der Ansprüche 1 bis 5, und einer Schaltvorrichtung (40), wobei die Schaltvorrichtung (40) in den Versorgungsstrang der Versorgungsquelle (50) zum Versorgungsanschluss (7) des Schaltgeräts (1) derart zwischengeschaltet ist, dass durch eine Betätigung der Schaltvorrichtung (40) eine durch die Versorgungsquelle (50) erfolgende Energieversorgung zum Schaltgerät (1) unterbrochen wird.

7. Verfahren eines Schaltgeräts (1), welches eine Steuereinheit (2), einen Versorgungsanschluss (7), ein Netzteil (19), welches ein geräteinternes Netzteil (19) des Schaltgerätes (1) ist und die am Versorgungsanschluss (7) anliegende Spannung in eine andere Spannung umwandelt, und eine erste Strombahn (15), die mit einem Versorgungsnetz (9) verbunden ist, umfasst, wobei die erste Strombahn (15) einen ersten elektromechanischen Schalter (11) und eine in Reihe zum ersten Schalter (11) geschaltete Parallelschaltung eines zweiten elektromechanischen Schalters (13) mit einem Halbleiterschalter (12) umfasst, wobei die Steuereinheit (2) ein Schaltsignal für den ersten Schalter (11), den zweiten Schalter (13) und den Halbleiterschalter (12) ausgeben kann, wobei der Versorgungsanschluss (7) mit dem Netzteil (19) verbunden ist und die Steuereinheit (2) über das Netzteil (19) die Energie für die Schaltsignale bezieht,
**dadurch gekennzeichnet, dass**
das Schaltgerät (1) einen Energiespeicher (6) und eine mit der Steuereinheit (2) verbundene Messvorrichtung (8) umfasst, wobei der Energiespeicher (6) zwischen dem Versorgungsanschluss (7) und dem Netzteil (19) zwischengeschaltet ist, so dass mittels des Energiespeichers (6) die über den Versorgungsanschluss (7) erfolgende Energieversorgung des Schaltgerätes (1) durch eine Versorgungsquelle (50) geräteintern gepuffert wird, wobei die Steuereinheit (2) mittels der Messvorrichtung (8) die über den Versorgungsanschluss (7) erfolgende Energieversorgung des Schaltgerätes im Bereich zwischen dem Versorgungsanschluss (7) und dem Netzteil (19) überwacht, wobei die Steuereinheit (2), wenn die mittels der Messvorrichtung (8) überwachte Energieversorgung in einen kritischen Bereich fällt, mittels der Energie des Energiespeichers (6):
- in einem ersten Schritt den Halbleiterschalter (12) elektrisch leitend schaltet und anschließend den zweiten Schalter (13) öffnet,
- nach dem ersten Schritt in einem zweiten Schritt den Halbleiterschalter (12) elektrisch nichtleitend schaltet und anschließend den ersten Schalter (11) öffnet
wobei der Energiespeicher (6) derart ausgebildet ist, dass er die Ausgabe der erforderlichen Schaltsignale für die ersten und zweiten Schritte sicherstellt und
wobei dadurch, dass mittels des Energiespeichers (6) die Energiepufferung auf der zum Versorgungsanschluss (7) gerichteten Primärseite des Netzteils (19) erfolgt, bei einem Spannungseinbruch am Versorgungsanschluss (7) die Sekundärseite des Netzteils (19) ihren Spannungspegel bis zu einem gewissen Zeitpunkt konstant halten kann und der Spannungseinbruch auf der Sekundärseite erst nach der Beendigung der gesteuerten Abschaltsequenz, gebildet durch den ersten und zweiten Schritt, auftritt.

8. Verfahren des Schaltgeräts (1) nach Anspruch 7, wobei die Steuereinheit (2) im zweiten Schritt den Halbleiterschalter (12,22) im Stromnulldurchgang, der über ihn erfolgenden Energiezufuhr, in den elektrisch nichtleitenden Zustand schaltet.

## Claims

1. Switching device (1) comprising a control unit (2), a power supply connection (7), a power supply unit (19), which is a power supply unit (19) of the switching device (1) inside the device and which converts the voltage applied to the power supply connection (7) into a different voltage, and a first current path (15) connected to a power supply network (9), which comprises a first electromechanical switch (11) and a parallel circuit of a second electromechanical switch (13) with a semiconductor switch (12) connected in series to the first switch (11), wherein the control unit (2) is able to emit a switching signal for the first switch (11), the second switch (13) and the semiconductor switch (12), wherein the power supply connection (7) is connected to the power supply unit (19) and the control unit (2) obtains the energy for the switching signals via the power supply unit (19),
**characterised in that**
the switching device (1) comprises an energy store (6) and a measuring device (8) connected to the control unit (2), wherein the energy store (6) is connected in series between the power supply connection (7) and the power supply unit (19) so that, by means of the energy store (6), energy supplied to the switching device (1) via the power supply connection (7) is buffered on the inside of the device by the power supply source (50), wherein the control unit (2) is able to monitor by means of the measuring device (8) the energy supplied to the switching device via the power supply connection (7) in the region between the power supply connection (7) and the power supply unit (19), wherein the control unit (2) is configured such that if the energy supply monitored by means of the measuring device falls into a critical range, and using the energy from the energy store (6), said control unit
- in a first step switches the semiconductor switch (12) to an electrically conductive state and then opens the second switch (13), and
- after the first step, in a second step switches the semiconductor switch (12) to an electrically non-conductive state and then opens the first switch (11),
wherein the energy store (6) is configured such that it ensures the emission of the required switching signals for the first and second steps and
wherein since, by means of the energy store (6), the energy buffering takes place on the primary side of the power supply unit (19) oriented towards the power supply connection (7), in the case of a voltage dip at the power supply connection (7), the secondary side of the power supply unit (19) is able to keep its voltage level constant until a specific time and the voltage dip on the secondary side only occurs after the controlled disconnection sequence, formed by the first and second step, has been completed.

2. Switching device according to claim 1, wherein the energy store (6) may be charged up via the power supply connection (7) .

3. Switching device according to one of the preceding claims, wherein the switching device comprises a second measuring device (60) which is connected to the control unit (2), wherein by means of the second measuring device (8) the control unit (2) is able to monitor the energy supplied via the power supply connection (7) in the region between the power supply unit (19) and the control unit (2).

4. Switching device according to one of the preceding claims, wherein the switching device comprises a second current path (25) which comprises a first electromechanical switch (21) and a parallel circuit of a second electromechanical switch (23) with a semiconductor switch (22) connected in series to the first switch (21), wherein the control unit (2) may emit a switching signal for the first switch (21), the second switch (23) and the semiconductor switch (22) of the second current path (25), wherein the control unit (2) is configured such that if the energy supply monitored by means of the measuring device (8) falls into a critical range, and using the energy of the energy store (6), said control unit:
- in a first step switches the semiconductor switch (22) of the second current path (25) to an electrically conductive state and then opens the second switch (23) of the second current path (25), and
- after the first step, in a second step switches the semiconductor switch (22) of the second current path (25) to an electrically non-conductive state and then opens the first switch (21) of the second current path (25).

5. Switching device according to one of the preceding claims, wherein the control unit (2) is configured such that in the second step it switches the semiconductor switch (12, 22) in the current zero transition of the energy supplied thereby to the electrically non-conductive state.

6. System for the safe operation of an electric motor (5) comprising a switching device (1) according to one of claims 1 to 5, and a switching device (40), wherein the switching device (40) is connected in series in the supply section of the power supply source (50) to the power supply connection (7) of the switching device (1) such that, by an actuation of the switching device (40), energy supplied by the power supply source (50) to the switching device (1) is interrupted.

7. Method for a switching device (1) which comprises a control unit (2), a power supply connection (7), a power supply unit (19), which is a power supply unit (19) of the switching device (1) inside the device and which converts the voltage applied to the power supply connection (7) into a different voltage, and a first current path (15) connected to a power supply network (9), wherein the first current path (15) comprises a first electromechanical switch (11) and a parallel circuit of a second electromechanical switch (13) with a semiconductor switch (12) connected in series to the first switch (11), wherein the control unit (2) may emit a switching signal for the first switch (11), the second switch (13) and the semiconductor switch (12), wherein the power supply connection (7) is connected to the power supply unit (19) and the control unit (2) obtains the energy for the switching signals via the power supply unit (19),
**characterised in that**
the switching device (1) comprises an energy store (6) and a measuring device (8) connected to the control unit (2), wherein the energy store (6) is connected in series between the power supply connection (7) and the power supply unit (19) so that, by means of the energy store (6), the energy supplied to the switching device (1) via the power supply connection (7) is buffered on the inside of the device by the power supply source (50), wherein the control unit (2) by means of the measuring device (8) monitors the energy supplied to the switching device via the power supply connection (7) in the region between the power supply connection (7) and the power supply unit (19), wherein if the energy supply monitored by means of the measuring device (8) falls into a critical range, and using the energy of the energy store (6), the control unit (2) :
- in a first step switches the semiconductor switch (12) to an electrically conductive state and then opens the second switch (13), and
- after the first step, in a second step switches the semiconductor switch (12) to an electrically non-conductive state and then opens the first switch (11),
wherein the energy store (6) is configured such that it ensures the emission of the required switching signals for the first and second steps and
wherein since, by means of the energy store (6), the energy buffering takes place on the primary side of the power supply unit (19) oriented towards the power supply connection (7), in the case of a voltage dip at the power supply connection (7), the secondary side of the power supply unit (19) is able to keep its voltage level constant until a specific time and the voltage dip on the secondary side only occurs after the controlled disconnection sequence, formed by the first and second step, has been completed.

8. Method for the switching device (1) according to claim 7, wherein the control unit (2) in the second step switches the semiconductor switch (12, 22) in the current zero transition, of the energy supplied thereby, to the electrically non-conductive state.

## Revendications

1. Appareil (1) de coupure, comprenant une unité (2) de commande, une borne (7) d'alimentation, une partie (19) de réseau, qui est une partie (19) de réseau interne de l'appareil (1) de coupure et qui transforme la tension appliquée à la borne (7) d'alimentation en une autre tension, et une première voie (15) de courant, qui est reliée à un réseau (9) d'alimentation, qui comprend un premier interrupteur (11) électromécanique et un circuit parallèle, monté en série avec le premier interrupteur (11), d'un deuxième interrupteur (13) électromécanique et d'un interrupteur (12) à semi-conducteur, l'unité (2) de commande pouvant émettre un signal de coupure du premier interrupteur (11), du deuxième interrupteur (13) et de l'interrupteur (12) à semi-conducteur, la borne (7) d'alimentation étant reliée à la partie (19) de réseau et l'unité (2) de commande fournissant, par l'intermédiaire de la partie (19) de réseau, l'énergie pour les signaux de coupure,
**caractérisé en ce que**
l'appareil (1) de coupure comprend un accumulateur (6) d'énergie et un dispositif (8) de mesure relié à l'unité (2) de commande, l'accumulateur (6) d'énergie étant monté entre la borne (7) d'alimentation et la partie (19) de réseau, de manière à ce qu'au moyen de l'accumulateur (6) d'énergie, une alimentation en énergie de l'appareil (1) de coupure, par une source (50) d'alimentation, s'effectuant par l'intermédiaire de la borne (7) d'alimentation, soit mise en tampon d'une manière interne à l'appareil, l'unité (2) de commande pouvant, au moyen du dispositif (8) de mesure, dans la partie comprise entre la borne (7) d'alimentation et la partie (19) de réseau, contrôler l'alimentation en énergie, s'effectuant par l'intermédiaire de la borne (7) d'alimentation, de l'appareil de coupure, l'unité (2) de commande étant constituée de manière à, lorsque l'alimentation en énergie contrôlée au moyen du dispositif de mesure est dans un domaine critique, au moyen de l'accumulateur (6) d'énergie :
- dans un premier stade, rendre conducteur électriquement l'interrupteur (12) à semi-conducteur et ouvrir ensuite le deuxième interrupteur (13),
- après le premier stade, dans un deuxième stade, rendre non conducteur électriquement l'interrupteur (12) à semi-conducteur et ouvrir ensuite le premier interrupteur (11),
dans lequel l'accumulateur (6) d'énergie est constitué de manière à assurer l'émission des signaux de coupure nécessaires pour les premier et deuxième stades et
par le fait qu'au moyen de l'accumulateur (6) d'énergie, le tamponnage d'énergie s'effectue du côté primaire de la partie (19) de réseau tourné vers la borne (7) d'alimentation, s'il se trouve une chute de tension à la borne (7) d'alimentation, le côté secondaire de la partie (19) de réseau peut maintenir constant son niveau de tension jusqu'à un certain point et la chute de tension du côté secondaire ne se produit qu'après l'achèvement de la séquence de coupure commandée formée des premier et deuxième stades.

2. Appareil de coupure suivant la revendication 1, dans lequel l'accumulateur (6) d'énergie peut être chargé par l'intermédiaire de la borne (7) d'alimentation.

3. Appareil de coupure suivant l'une des revendications précédentes, dans lequel l'appareil de coupure comprend un deuxième dispositif (60) de mesure, qui est relié à l'unité (2) de commande, l'unité (2) de commande pouvant, dans la partie entre la partie (19) de réseau et l'unité (2) de commande, au moyen du deuxième dispositif (8) de mesure, contrôler l'alimentation en énergie s'effectuant par l'intermédiaire de la borne (7) d'alimentation.

4. Appareil de coupure suivant l'une des revendications précédentes, dans lequel l'appareil de coupure a une deuxième voie (25) de courant, qui comprend un premier interrupteur (21) électromécanique et un circuit en parallèle, monté en série avec le premier interrupteur (21), d'un deuxième interrupteur (23) électromécanique et d'un interrupteur (22) à semi-conducteur, l'unité (2) de commande pouvant émettre un signal de coupure du premier interrupteur (21), du deuxième interrupteur (23) et de l'interrupteur (22) à semi-conducteur de la deuxième voie (25) de courant, l'unité (2) de commande étant constituée de manière à, dans la mesure où l'alimentation en énergie, contrôlée au moyen du dispositif (28) de mesure, atteint un domaine critique, au moyen de l'énergie de l'accumulateur (6) d'énergie :
- dans un premier stade, rendre conducteur électriquement l'interrupteur (22) à semi-conducteur de la deuxième voie (25) de courant et ensuite ouvrir le deuxième interrupteur (23) de la deuxième voie (25) de courant,
- après le premier stade, dans un deuxième stade, rendre non conducteur électriquement l'interrupteur (22) à semi-conducteur de la deuxième voie (25) de courant et ensuite ouvrir le premier interrupteur (21) de la deuxième voie (25) de courant.

5. Appareil de coupure suivant l'une des revendications précédentes, dans lequel l'unité (2) de commande est constituée de manière à, dans le deuxième stade, mettre à l'état non conducteur électriquement l'interrupteur (12, 22) à semi-conducteur, au passage par zéro du courant de l'apport d'énergie s'effectuant par lui.

6. Système de fonctionnement sécurisé d'un moteur (5) électrique, comprenant un appareil (1) de coupure suivant l'une des revendications 1 à 5, et un dispositif (40) de coupure, le dispositif (40) de coupure étant monté dans la chaîne d'alimentation de la source (50) d'alimentation à la borne (7) d'alimentation de l'appareil (1) de coupure, de manière à interrompre, par un actionnement du dispositif (40) de coupure, une alimentation de l'appareil (1) de coupure en énergie s'effectuant par la source (50) d'alimentation.

7. Procédé d'un appareil (1) de coupure, qui comprend une unité (2) de commande, une borne (7) d'alimentation, une partie (19) de réseau, qui est interne à l'appareil (1) de coupure et qui transforme la tension appliquée à la borne (7) d'alimentation en une autre tension, et une première voie (15) de courant, qui est reliée à un réseau (9) d'alimentation, la première voie (15) de courant comprenant un premier interrupteur (11) électromécanique et un circuit en parallèle, monté en série avec le premier interrupteur (11), d'un deuxième interrupteur (13) électromécanique et d'un interrupteur (12) à semi-conducteur, l'unité (2) de commande pouvant émettre un signal de coupure du premier interrupteur (11), du deuxième interrupteur (13) et de l'interrupteur (12) à semi-conducteur, dans lequel la borne (7) d'alimentation est reliée à la partie (19) de réseau et l'unité (2) de commande fournit, par l'intermédiaire de la partie (19) de réseau, l'énergie pour les signaux de coupure,
**caractérisé en ce que**
l'appareil (1) de coupure comprend un accumulateur (6) d'énergie et un dispositif (8) de mesure reliés à l'unité (2) de commande, l'accumulateur (6) d'énergie étant monté entre la borne (7) d'alimentation et la partie (19) de réseau, de manière à ce que, au moyen de l'accumulateur (6) d'énergie, l'alimentation en énergie, s'effectuant par la borne (7) d'alimentation, de l'appareil (1) de coupure par une source (50) d'alimentation, soit mise en tampon d'une manière interne à l'appareil, l'unité (2) de commande contrôlant, dans la partie comprise entre la borne (7) d'alimentation et la partie (19) de réseau, au moyen du dispositif (8) de mesure, l'alimentation en énergie de l'appareil de coupure s'effectuant par la borne (7) d'alimentation, l'unité (2) de commande, si l'alimentation en énergie contrôlée au moyen du dispositif (8) de mesure, arrive dans une zone critique, au moyen de l'énergie de l'accumulateur (6) d'énergie :
- dans un premier stade, rendre conducteur électriquement l'interrupteur (12) à semi-conducteur et ensuite ouvre le deuxième interrupteur (13),
- après le premier stade, dans un deuxième stade, rend non conducteur électriquement l'interrupteur (12) à semi-conducteur et ouvre ensuite le premier interrupteur (11), dans lequel l'accumulateur (6) d'énergie est constitué de manière à assurer l'émission des signaux de coupure nécessaires pour les premier et deuxième stades, et
par le fait qu'au moyen de l'accumulateur (6) d'énergie, le tamponnage d'énergie s'effectue du côté primaire de la partie (19) de réseau tourné vers la borne (7) d'alimentation, s'il se trouve une chute de tension à la borne (7) d'alimentation, le côté secondaire de la partie (19) de réseau peut maintenir constant son niveau de tension jusqu'à un certain point et la chute de tension du côté secondaire ne se produit qu'après l'achèvement de la séquence de coupure commandée formée des premier et deuxième stades.

8. Procédé de l'appareil (1) de coupure suivant la revendication 7, dans lequel l'unité (2) de commande met, à l'état non conducteur électriquement, dans le deuxième stade, l'interrupteur (12, 22) à semi-conducteur, au passage par zéro du courant, de l'apport d'énergie s'effectuant par lui.
